(19) Europäisches Patentamt
European Patent Office
Office européen des brevets

(11) EP 4 063 524 A1

(12) **EUROPEAN PATENT APPLICATION**
published in accordance with Art. 153(4) EPC

(43) Date of publication:
28.09.2022 Bulletin 2022/39

(21) Application number: 20889482.4

(22) Date of filing: 16.11.2020

(51) International Patent Classification (IPC):
$C21B\ 5/06$ (2006.01)     $C21B\ 7/00$ (2006.01)

(52) Cooperative Patent Classification (CPC):
C21B 5/06; C21B 7/00; Y02P 10/122

(86) International application number:
PCT/KR2020/016101

(87) International publication number:
WO 2021/101193 (27.05.2021 Gazette 2021/21)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 20.11.2019 KR 20190149711

(71) Applicant: POSCO
Pohang-si, Gyeongsangbuk-do 37859 (KR)

(72) Inventors:
• LEE, Seungmoon
  Pohang-si Gyeongsangbuk-do 37859 (KR)
• YANG, Young-Cheol
  Pohang-si Gyeongsangbuk-do 37859 (KR)

(74) Representative: Potter Clarkson
The Belgrave Centre
Talbot Street
Nottingham NG1 5GG (GB)

(54) **METHOD FOR PRODUCING CARBON MONOXIDE AND USE THEREOF**

(57) The present disclosure relates to an apparatus for reforming carbon dioxide, in which an inside of the apparatus is filled with a mixture of a carbon-containing by-product and an iron-containing by-product, a mixing ratio of the carbon-containing by-product and the iron-containing by-product includes 10 to 50 wt% of the iron-containing by-product based on 100 wt% of the carbon-containing by-product, and the carbon dioxide is reformed into carbon monoxide and a system and method for producing molten iron capable of recycling carbon dioxide in an exhaust gas in a blast furnace using the same.

FIG. 2

EP 4 063 524 A1

**Description**

**[Technical Field]**

The present disclosure relates to a method of producing carbon monoxide. More specifically, the present disclosure relates to a method of converting carbon dioxide into carbon monoxide to save carbon dioxide emission and utilizing the carbon monoxide.

**[Background Art]**

A reduction process in a steel industry is a process in which carbon in coke and iron ore undergo a chemical reaction due to a high temperature in a blast furnace called a smelting furnace to obtain liquid iron. A problem with a current steelmaking process is that a large amount of carbon dioxide ($CO_2$) is inevitably emitted by using a carbon-based reducing agent such as coal for the reduction process. However, as pressures on carbon dioxide emission regulations are intensified around the world, the steel industry is increasingly interested in environmentally-friendly in terms of environment, energy, and cost competitiveness. In particular, after the Kyoto Protocol, efforts to save $CO_2$ emission and save energy have been accelerating. Since a carbon tax is being applied to the steel industry as well, interest in a method of lowering a reducing agent ratio used in a blast furnace and a method of saving carbon dioxide emission is increasing recently.

In order to save the amount of carbon dioxide emitted in a process of producing molten iron, it is important to efficiently use an exhaust gas emitted during the production of the molten iron. Main components of the exhaust gas emitted during the production of the molten iron include CO, $H_2$, $CO_2$, $H_2O$, $N_2$, and the like, and CO and $H_2$ in the exhaust gas can be used as a reducing agent or a heat source that generates heat.

Therefore, as efforts to save the reducing agent ratio and carbon dioxide used in the blast furnace, a technology of selecting only carbon monoxide (CO) in an exhaust gas in a blast furnace and re-blowing the selected carbon monoxide (CO) into the blast furnace, a technology of using, as a medium, hydrogen in place of carbon (coal) to lower the reducing agent ratio through hydrogen reduction and fundamentally block carbon dioxide emission, and the like are being researched. However, the technology of selectively separating and recovering carbon monoxide and re-blowing the carbon monoxide into a blast furnace has a problem in that a recovery rate of separation and recovery of CO and $N_2$ in an exhaust gas is low, and the hydrogen reduction technology using hydrogen as a medium has a problem in that economical efficiency is low and changes in operation cannot be predicted when a reducing agent is used. In addition, in order to re-blow the separated CO gas and produced hydrogen gas into the blast furnace, there is a problem in that temperature needs to be raised to 1200°C or higher, which is a blowing temperature of the blast furnace, in consideration of a heat balance inside the blast furnace. Accordingly, technology development is still required.

**[Disclosure]**

**[Technical Problem]**

The present invention has been made in an effort to provide a method of selectively separating and capturing carbon dioxide in an exhaust gas in a blast furnace, recycling by-products produced in a steel mill to reduce the carbon dioxide to the carbon monoxide, and re-blowing the produced carbon monoxide into the blast furnace.

**[Technical Solution]**

An exemplary embodiment of the present invention provides a method of producing molten iron, including: capturing carbon dioxide in an exhaust gas emitted from a blast furnace; reforming the carbon dioxide into carbon monoxide; and re-blowing the carbon monoxide into the blast furnace, in which, in the re-blowing of the carbon monoxide into the blast furnace, CO gas re-blowing amount ($Nm^3$/min) of [Equation 1] below may satisfy 500 or more and 1270 or less.

[Equation 1] Amount of CO gas re-blown ($Nm^3$/min) = Content of $CO_2$ gas in exhaust gas ($Nm_3$/ton) × Molten iron output (ton/day) × Ratio of $CO_2$ gas blown into runner (50%) × CO gas conversion rate (%) × (1 day/1440 min)

A CO gas circulation rate of [Equation 2] below may be 15 to 40%.

$$\text{[Equation 2] CO gas circulation rate (\%)} = \text{Amount of CO gas re-blown}$$

$$(Nm^3/min)/[\text{Content of CO gas in exhaust gas } (Nm^3/ton) \times \text{Molten iron output}$$

$$(\text{ton/day})] \times (1440 \text{ min/1 day}) \times 100[\%]$$

The CO gas conversion rate of the above [Equation 1] or [Equation 2] may be 35% or more to less than 85%.

In the re-blowing of the carbon monoxide into the blast furnace, a temperature of the carbon monoxide may be 800°C or higher.

In the re-blowing of the carbon monoxide into the blast furnace, the amount (kr/ton-pig) of pulverized coal blown according to the CO conversion rate of [Equation 3] below may satisfy 100 to 170 kg/ton-pig.

$$\text{[Equation 3] Amount (kg/ton-pig) of pulverized coal blown according to CO}$$

$$\text{conversion rate} = -0.007*[\text{CO conversion rate (\%)}]^2 - 0.00005*[\text{CO conversion}$$

$$\text{rate (\%)}] + 170.3$$

Another embodiment of the present invention provides an apparatus for reforming carbon dioxide, in which an inside of the apparatus may be filled with a mixture of a carbon-containing by-product and an iron-containing by-product, a mixing ratio of the carbon-containing by-product and the iron-containing by-product may include 10 to 50 wt% of the iron-containing by-product based on 100 wt% of the carbon-containing by-product, and the carbon dioxide may be reformed into carbon monoxide.

A specific surface area of the carbon-containing by-product may be 50 m²/g or more.

A carbon component of the carbon-containing by-product may be 80 wt% or more, and an iron-containing component of the iron-containing by-product may be 50 wt% or more.

Yet another embodiment of the present invention provides an apparatus for reforming carbon dioxide in exhaust gas emitted from a blast furnace, in which the apparatus for reforming carbon dioxide may be installed in a melt runner during an iron making process.

At least one apparatus for reforming carbon dioxide may be installed over the entire area of the melt runner.

When the apparatus for reforming carbon dioxide is two or more, reaction tubes may be installed, fixed, and connected in a form of a bundle or a mesh.

The melt runner may have a cover on the melt, and the apparatus for reforming carbon dioxide may be present between the melt and the cover.

The temperature between the melt in the melt runner and the cover may be 900°C or higher.

A position of the apparatus for reforming carbon dioxide may be adjusted in consideration of the amount of melt in the melt runner.

**[Advantageous Effects]**

According to an embodiment of the present invention, it is possible to reform carbon dioxide captured in a blast furnace into carbon monoxide in an apparatus for reforming carbon dioxide.

In addition, according to an embodiment of the present invention, when the apparatus for reforming carbon dioxide is re-blown into a blast furnace by using radiant heat from a melt in a melt runner, it is possible to maintain an energy balance in the blast furnace.

In addition, according to an embodiment of the present invention, since carbon dioxide in an exhaust gas of a blast furnace is captured and used, it is possible to save carbon dioxide emission.

In addition, according to an embodiment of the present invention, it is possible to save a reducing agent ratio by re-blowing the produced carbon monoxide into a blast furnace

**[Description of the Drawings]**

FIG. 1 is a diagram illustrating an overall configuration diagram of production and utilization of carbon monoxide according to an exemplary embodiment of the present invention.

FIG. 2 is a schematic partial configuration diagram of positioning an apparatus for reforming carbon dioxide in a runner according to an exemplary embodiment of the present invention.

FIG. 3 is a diagram illustrating a carbon monoxide conversion rate of carbon-containing by-product utilizing radiant heat according to an exemplary embodiment of the present invention.

FIG. 4 is a diagram illustrating carbon monoxide conversion rates of carbon-containing by-product and iron-containing by-product utilizing radiant heat according to an exemplary embodiment of the present invention.

FIG. 5 is a schematic diagram of a CO reforming reaction tube installed in the runner.

**[Mode for Invention]**

The terms first, second, third, and the like are used to describe, but are not limited to, various parts, components, areas, layers and/or sections. These terms are used only to distinguish a part, component, region, layer, or section from other parts, components, regions, layers, or sections. Accordingly, a first part, a component, an area, a layer, or a section described below may be referred to as a second part, a component, a region, a layer, or a section without departing from the scope of the present invention.

Terminologies used herein are to mention only a specific exemplary embodiment, and are not to limit the present invention. Singular forms used herein include plural forms as long as phrases do not clearly indicate an opposite meaning. The meaning "including" used in the present specification concretely indicates specific properties, areas, integer numbers, steps, operations, elements, and/or components, and is not to exclude presence or addition of other specific properties, areas, integer numbers, steps, operations, elements, and/or components thereof.

When a part is referred to as being "above" or "on" other parts, it may be directly above or on other parts, or other parts may be included in between. In contrast, when a part is referred to as being "directly above" another part, no other part is involved in between.

In addition, unless otherwise specified, % means wt%, and 1 ppm is 0.0001 wt%.

All terms including technical terms and scientific terms used herein have the same meaning as the meaning generally understood by those skilled in the art to which the present invention pertains unless defined otherwise. Commonly used terms defined in the dictionary are additionally interpreted as having a meaning consistent with the related technical literature and the presently disclosed content, and unless defined, are not interpreted in an ideal or very formal meaning.

Hereinafter, an exemplary embodiment of the present invention will be described in detail so that a person of ordinary skill in the art to which the present invention pertains can easily implement the present invention. The present invention may be modified in various different ways, and is not limited to the exemplary embodiments described herein.

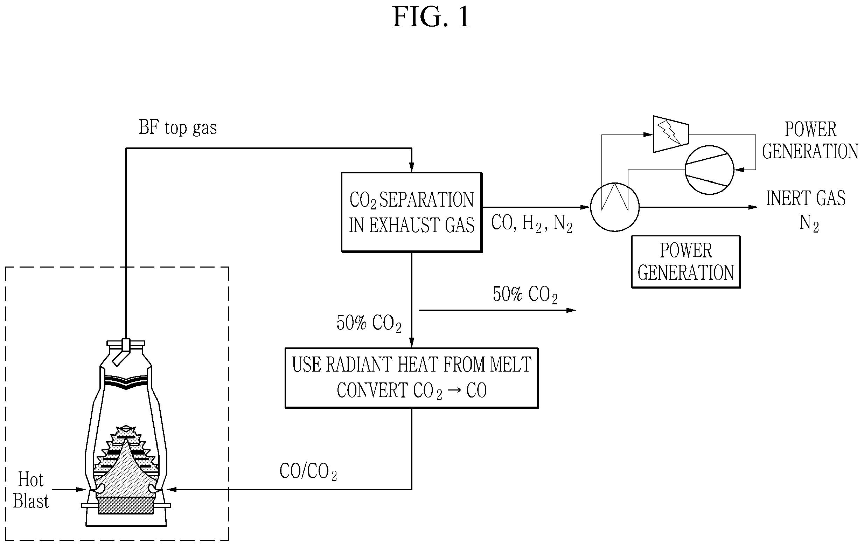

FIG. 1 is an overall configuration diagram of utilization in production of carbon monoxide and production of molten iron according to an exemplary embodiment of the present invention. Currently, a process of producing molten iron in an integrated steel mill mainly relies on a blast furnace method, and mainly uses carbon monoxide emitted from coal as a reducing agent for iron ore, so a huge amount of carbon dioxide is emitted in the process of producing molten iron. For example, in order to produce 1 ton of steel products, about 2.18 tons of carbon dioxide is emitted. 80% of the carbon dioxide is emitted due to the use of coal in the process of producing molten iron. Meanwhile, the price of coking coal suitable for the blast furnace process has risen sharply due to the recent surge in fuel prices in the steel industry, making the price competitiveness of the process of producing molten iron worse. In order to solve this problem, a method of selectively separating and recovering carbon dioxide from an exhaust gas in a blast furnace, reforming the carbon dioxide into carbon monoxide, and re-blowing the carbon monoxide into the blast furnace is proposed, which is illustrated in FIG. 1. The content of carbon dioxide in the exhaust gas component in the blast furnace is about 20 to 25%, and in the case of the blast furnace with an internal volume of 5000 $Nm^3$ or more, more than 16,000 $Nm^3$ of carbon dioxide is emitted per minute. In order to selectively separate and recover only carbon dioxide and convert the carbon dioxide into the carbon monoxide, the carbon monoxide is produced by the method presented in FIG. 1. In this case, the temperature of the produced carbon monoxide is about 800°C, and the use of coke and PCI coal, which are used as reducing agents, may be saved by blowing the produced high-temperature carbon monoxide into a tuyere of the blast furnace.

Hereinafter, the method of producing molten iron for reforming carbon dioxide into carbon monoxide and re-blowing the carbon monoxide will be described in more detail.

An exemplary embodiment of the present invention provides a method of producing molten iron, including: capturing carbon dioxide in an exhaust gas emitted from a blast furnace; reforming the carbon dioxide into carbon monoxide; and re-blowing the carbon monoxide into the blast furnace, in which, in the re-blowing of the carbon monoxide into the blast furnace, the amount of CO gas re-blown ($Nm^3$/min) of [Equation 1] below may satisfy 500 or more and 1270 $Nm^3$/min or less. The value of [Equation 1] may be specifically 500 to 970 $Nm^3$/min, and more specifically 500 to 750 $Nm^3$/min. When the value of [Equation 1] is less than 500 $Nm^3$/min, there may be a slight problem in the $CO_2$ saving effect compared with the technology investment, and when the value of [Equation 1] exceeds 1270 $Nm^3$/min, there may be a problem in that the amount of carbon monoxide is increased, and thus, a total input gas blown into the blast furnace is reduced, and an oxygen load should be increased in order to preserve heat energy as much as the reduced total input gas.

[Equation 1] Amount of CO gas re-blown ($Nm^3$/min) = Content of $CO_2$ gas in exhaust gas ($Nm^3$/ton) × Molten iron output (ton/day) × Ratio of $CO_2$ gas blown into runner (50%) × CO gas conversion rate (%) × (1 day/1440 min)

In the method of producing molten iron, a CO gas circulation rate of [Equation 2] below may be 15 to 40%. The value of [Equation 2] may be specifically 16 to 32%, more specifically 24 to 32%, and even more specifically 24 to 30%. When the value of the CO gas circulation value of [Equation 2] is less than 15%, there may be a slight problem in the $CO_2$ saving effect compared with the technology investment, and when the value of the CO gas circulation rate exceeds 40%, there may be a problem in that the amount of carbon monoxide is increased, and thus, the total input gas blown into the blast furnace is reduced, and an oxygen load should be increased in order to preserve the heat energy as much as the reduced total input gas.

[Equation 2] CO gas circulation rate (%) = Amount of CO gas re-blown ($Nm^3$/min)/[Content of CO gas in exhaust gas ($Nm^3$/ton) × Molten iron output (ton/day)] × (1440 min/1 day) × 100[%]

The CO gas conversion rate of the above [Equation 1] or [Equation 2] may be 35% or more to less than 85%.

In the re-blowing of the carbon monoxide into the blast furnace, the temperature of carbon monoxide may be 800°C or higher, specifically 800 to 1500°C, more specifically 900 to 1200°C, and even more specifically 1000 to 1100°C.

In the re-blowing of the carbon monoxide into the blast furnace, the amount (kr/ton-pig) of pulverized coal blown according to the CO conversion rate of [Equation 3] below may satisfy 100 to 170 kg/ton-pig. The value of Equation 2 may be specifically 100 (kg/ton-pig) or more, more specifically 170 to 100, and even more specifically, 170.3 (kg/ton-pig) to 100.295 (kg/ton-pig). When the amount of pulverized coal blown of [Equation 3] is less than 100 kg/ton-pig, there may be a problem in that a heat value in the blast furnace is insufficient, and when the amount of pulverized coal blown exceeds 170 kg/ton-pig, there may be a problem in that the purpose of saving the reducing agent ratio by increasing the pulverized coal ratio or reducing the amount of coke used may not be achieved due to the increased pressure for ventilation in the blast furnace.

[Equation 3] Amount (kg/ton-pig) of pulverized coal blown according to CO conversion rate = -0.007*[CO conversion rate (%)]$^2$-0.00005*[CO conversion rate (%)] + 170.3

In the capturing of the carbon dioxide in the exhaust gas emitted from the blast furnace, the carbon dioxide may be selectively captured by at least one selected from the group consisting of pressure swing adsorption (PSA), a deep cooling method, an ammonia/amine absorption method, an adsorbent usage, a metal organic framework (MOF), and a membrane separation method.

The conversion rate for reforming the carbon dioxide into carbon monoxide may be 35% or more, specifically 35 to 85%. More specifically, the conversion rate may be 35 to 64%, more specifically 35 to 50%.

The reformed carbon monoxide may be recycled where a heat source is needed, such as drying refractory etc., in the runner in addition to being re-blown into the blast furnace through the tuyere of the blast furnace.

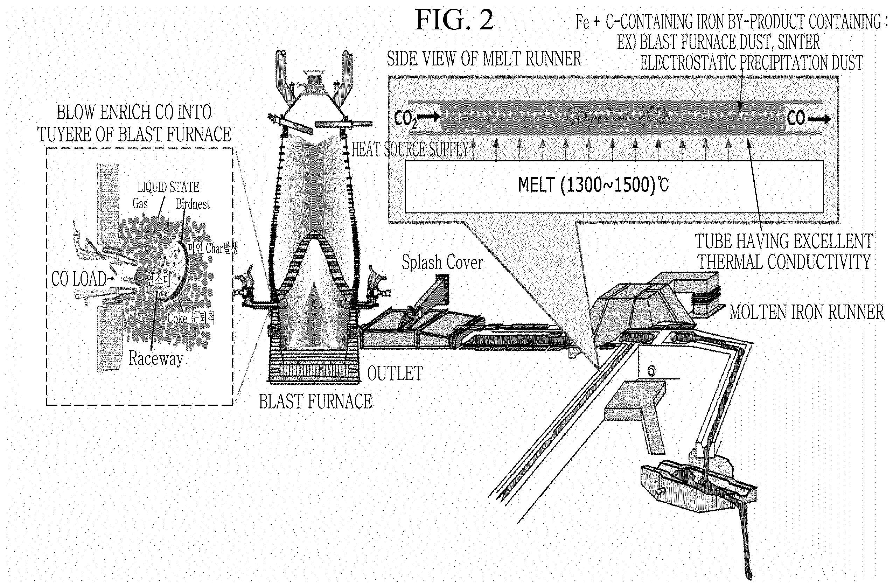

FIG. 2 is a schematic partial configuration diagram of the production of carbon monoxide in the runner according to an embodiment of the present invention. In general, sinter ore, coke, and limestone are blown from the top of the blast furnace and slowly fall down. In this case, the coke is burned by the hot air flowing into the bottom of the blast furnace, and the carbon monoxide emitted in this process undergoes a reduction reaction with iron ore to produce molten iron. In this case, the temperature of the produced melt is 1,500°C or higher. Radiant heat is emitted to the melt runner by this temperature, and the temperature of the radiant heat at this time is about 900°C to 1200°C. An apparatus for reforming carbon dioxide formed of a material with excellent conductivity is installed on top of this melt, and carbon dioxide is blown. The carbon-containing by-product and iron-containing by-product are mixed in a certain ratio and then filled inside, and the carbon dioxide is reformed into the carbon monoxide by utilizing the radiant heat from the melt. The carbon-containing by-product may supply a carbon source for reforming carbon dioxide into carbon monoxide, and the iron-containing by-product may act as a reforming catalyst.

Hereinafter, each configuration of the apparatus for reforming carbon dioxide will be described in more detail.

The apparatus for reforming carbon dioxide according to an exemplary embodiment of the present invention may promote a Boudouard reaction between the carbon dioxide and the carbon-containing byproducts to reform the carbon dioxide into the carbon monoxide as shown in the following reaction formula.

$$CO_2 + C \rightarrow 2CO$$

In the apparatus for reforming carbon dioxide according to embodiment of the present invention, the inside of the apparatus may be filled with a mixture of the carbon-containing by-product and the iron-containing by-product, and a mixing ratio of the carbon-containing by-product and the iron-containing by-product may include 10 to 50 wt% of the iron-containing by-product based on 100 wt% of the carbon-containing by-product.

The mixing ratio of the carbon-containing by-product and the iron-containing by-product in the mixture may be adjusted according to the content of iron in the iron-containing by-product. Based on 100 wt% of the carbon-containing by-product, the iron-containing by-product may be specifically 0 to 50 wt%, more specifically 10 to 40 wt%, and even more specifically 20 to 40 wt%. When the iron-containing by-product is mixed in excess of 50 wt% based on 100 wt% of the carbon-containing by-product, the surface of the carbon-containing by-product that reacts with $CO_2$ gas will be excessively covered, so there may be a problem in that an interface of the carbon-containing byproducts is rather reduced.

The specific surface area of the carbon-containing by-product may be 50 m²/g or more, specifically 50 to 300 m²/g, more specifically 100 to 290 m²/g, even more specifically 200 to 285 m²/g, and even much more specifically 250 to 280 m²/g. When the specific surface area is less than 50 m²/g, the reaction of the carbon-containing by-product with gas is significantly lowered, so there may be a problem in that the reaction rate or conversion rate is lowered, and when the specific surface area is too large, such as when the specific surface area is more than 300 m²/g, since the carbon-containing by-product reacts with more gas, the reaction time is shortened, so there may be a problem in that it is difficult to control.

The carbon component of the carbon-containing by-product may be 60 wt% or more, specifically, 80 to 90 wt%, and more specifically 82 to 87 wt%. When the carbon component of the carbon-containing by-product is less than 60 wt%, there may be a problem in that the amount of converted gas is reduced by reducing the amount of carbon compared with the amount of gas blown, and when the carbon component is more than 90 wt%, there may be a problem in that there is a deactivated carbon component because there are a large amount of carbon components compared with the amount of gas blown.

The iron-containing component of the iron-containing by-product may be 50 wt% or more, specifically 50 to 100 wt%, and more specifically 50 to 60 wt%. When the iron-containing component of the iron-containing by-product is less than 50 wt%, since the active energy of the reaction is increased due to the reduction in the iron-containing component serving as a catalyst, the reaction rate is slowed down, so there may be a problem in that the conversion rate is lowered.

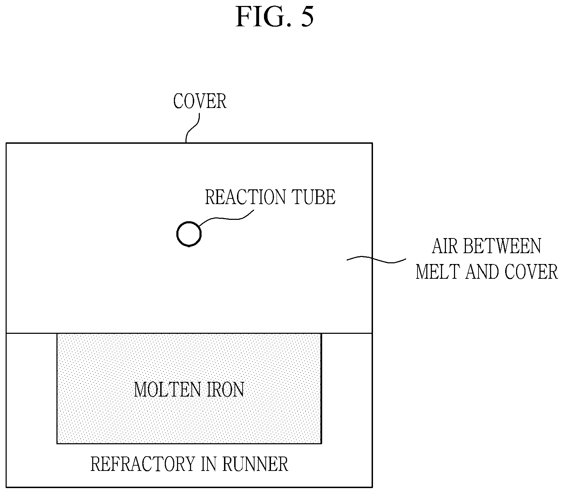

In addition, the apparatus for reforming carbon dioxide according to the exemplary embodiment of the present invention is an apparatus for reforming carbon dioxide in exhaust gas emitted from a blast furnace, in which the apparatus for reforming carbon dioxide may be installed in a melt runner during an iron making process. The apparatus for reforming carbon dioxide may be installed in the melt runner during the iron making process to use the radiant heat of the melt (see FIG. 5).

At least one apparatus for reforming carbon dioxide may be installed over the entire area of the melt runner. In addition, the apparatus for reforming carbon dioxide may be detachable depending on the operating conditions in the runner. In addition, as the apparatus for reforming carbon dioxide is 1 or more, a carbon dioxide blowing inlet may also be 1 or more.

When the apparatus for reforming carbon dioxide is two or more, reaction tubes may be installed, fixed, and connected in a form of a bundle or a mesh.

The melt runner may have a cover on the melt, and the apparatus for reforming carbon dioxide may be present between the melt and the cover.

The temperature of the air between the melt and the cover may be 900°C or higher, specifically 900 to 1500°C, and more specifically 900 to 1200°C. This high-temperature heat is transferred to the apparatus for reforming carbon dioxide, where the carbon dioxide reacts with the carbon-containing by-product to be reformed into the carbon monoxide.

The position of the apparatus for reforming carbon dioxide may be adjusted in consideration of the amount of melt in the runner. Specifically, the position of the apparatus for reforming carbon dioxide may be determined according to the temperature and amount of melt flowing in the runner.

Specifically, when the melt flows in the melt runner, the apparatus for reforming carbon dioxide may be installed 100 to 500 mm from the top of the surface of the melt, and specifically 200 to 400 mm above. When the apparatus for reforming carbon dioxide is installed too close from the top of the surface of the melt, there may be a problem in that the installed reaction tube is deformed, and when the apparatus for reforming carbon dioxide is installed too far from the top of the surface of the melt, there may be a problem in that, since the radiant heat is not sufficiently transmitted, the temperature inside the reaction tube does not become high enough to react.

The material of the apparatus for reforming carbon dioxide is sufficient as long as the radiant heat from the melt in the melt runner is transmitted well, and may be at least one selected from the group consisting of tungsten, molybdenum, silicon carbide, and aluminum nitride, and specifically tungsten.

Hereinafter, the present invention will be described in more detail through exemplary embodiments. However, these exemplary embodiments are merely intended to illustrate the present invention, and the present invention is not limited thereto.

**Exemplary embodiment 1- Comparison according to carbon monoxide conversion rate**

In the present invention, in order to investigate the heat balance and carbon dioxide saving effect by reforming the carbon dioxide gas in the exhaust gas in the blast furnace into the carbon monoxide and re-blowing the carbon monoxide into the tuyere of the blast furnace, the heat balance and carbon dioxide saving effect were calculated using a thermal mass balance equation.

Table 1 shows the balance and carbon dioxide saving effect in the blast furnace according to the re-blowing of the carbon monoxide into the tuyere of the blast furnace for each carbon monoxide gas conversion rate produced according to the embodiment of the present invention in molten iron.

(Table 1)

| | Base* | 85 | 65 | 50 | 35 |
|---|---|---|---|---|---|
| CO conversion rate (%) | Base* | 85 | 65 | 50 | 35 |
| CO circulation rate (%) | - | 32.5 | 24.9 | 19.2 | 13.4 |
| Ratio of pulverized coal blown of [Equation 3] (kg/t-p*) | 170.3 | 119.7 | 140.7 | 152.8 | 161.7 |
| Difference value compared with base (kg/t-p) | - | 50.8 | 29.7 | 17.6 | 8.6 |
| Carbon reduction amount compared with base (kg/t-p) | - | 42.6 | 24.9 | 14.8 | -7.2 |
| $CO_2$ saving compared with base (kg/t-p) | - | 156.3 | 91.4 | 54.1 | 26.5 |
| Total input gas (Nm³/t-p) | 830.91 | 812.23 | 825.97 | 831.53 | 834.01 |
| Difference absolute value in total input gas compared with base (Nm³/t-p) | - | 18.68 | 4.94 | 0.62 | 3.1 |
| Bosh gas volume | 740.57 | 575.86 | 614.34 | 643.68 | 672.75 |
| *Base refers to the existing blast furnace into which carbon monoxide is not blown.<br>*t-p refers to ton-pig. | | | | | |

[Equation 3] Amount (kg/ton-pig) of pulverized coal blown according to CO conversion rate = $-0.007*[CO \ conversion \ rate \ (\%)]^2 - 0.00005*[CO \ conversion \ rate \ (\%)] + 170.3$

For each carbon monoxide conversion rate, the circulation rate of the carbon monoxide produced from the runner to the tuyere of the blast furnace was calculated as 32.5% when the carbon monoxide conversion rate is 85%, 24.9% when the carbon monoxide conversion rate is 65%, 19.2% when the carbon monoxide conversion rate is 50%, and 13.4% when the carbon monoxide conversion rate is 35%. The amount of CO gas produced by reacting the carbon-containing by-product filled in the reactor installed in the runner with the $CO_2$ gas blown into the reactor is expressed as the conversion rate, and in order to blow the amount of CO gas produced for each conversion rate into the tuyere of the blast furnace, the amount of CO gas replaceable with respect to the total input gas blown into the tuyere of the blast furnace in consideration of the heat balance in the blast furnace is the circulation rate.

The effect of saving the reducing agent ratio according to the carbon monoxide conversion rate to about 50 kg/t-p of pulverized coal when carbon monoxide having a conversion rate of 85% is blown was shown. In this case, the carbon saving was shown as about 43kg/t-p, and the $CO_2$ saving effect was shown as about 156kg/t-p. However, it can be seen that re-blowing the carbon monoxide having the conversion rate of 85% increases the amount of carbon monoxide as the circulation rate is increased, and thus, the total input gas blown into the blast furnace is reduced by about 20 Nm3/t-p, so there is a disadvantage in that the oxygen load should be increased in order to preserve the heat energy as much as the reduced total input gas. In addition, the CO gas having the conversion rate of 50% showed the closest value to the total input gas blown into the blast furnace, but the bosh gas volume, which is an index for determining the heat balance at the bottom of the blast furnace, was lower than that of blowing the CO gas having the conversion rate of 30%. Accordingly, it can be seen that it is appropriate to re-blow the carbon dioxide having a conversion rate of 35% into the blast furnace in consideration of the amount of carbon dioxide gas emitted to the outside of the blast furnace while maintaining the heat balance inside the blast furnace.

**Exemplary Embodiment 2** - **Amount of CO gas re-blown according to carbon monoxide conversion rate**

An experiment was conducted to find out the amount of CO gas re-blown into the blast furnace according to the carbon dioxide conversion rate.

The CO gas conversion rate was changed as shown in Table 2 below, and the exhaust gas emission and the molten iron output were kept constant.

The amount of CO gas re-blown was calculated according to Equation 1 below.

[Equation 1] Amount of CO gas re-blown ($Nm^3$/min) = Content of $CO_2$ gas in exhaust gas ($Nm^3$/ton) × Molten iron output (ton/day) × Ratio of $CO_2$ gas blown into runner (50%) × CO gas conversion rate (%) × (1 day/1440 min)

(Table 2)

| | Comparative Example1 | Comparative Example 2 | Exemplary embodiment 1 | Exemplary embodiment 2 | Exemplary embodiment 3 | Comparative Example 3 |
|---|---|---|---|---|---|---|
| CO conversion rate (%) | 90 | 85 | 65 | 50 | 35 | 25 |
| Exhaust gas emission ($Nm^3$/ton) | 1410.89 | 1410.89 | 1410.89 | 1410.89 | 1410.89 | 1410.89 |
| Content of CO in exhaust gas (%) | 29.61 | 29.40 | 28.54 | 27.87 | 27.16 | 26.67 |
| Ratio of $CO_2$ in exhaust gas (%) | 28.45 | 28.25 | 27.42 | 26.78 | 26.10 | 25.62 |
| Content of $CO_2$ in exhaust gas ($Nm^3$/ton) | 401.4 | 398.6 | 386.9 | 377.8 | 368.2 | 361.5 |

(continued)

| | Comparative Example1 | Comparative Example 2 | Exemplary embodiment 1 | Exemplary embodiment 2 | Exemplary embodiment 3 | Comparative Example 3 |
|---|---|---|---|---|---|---|
| Molten iron output (ton/day) | 14000 | 14000 | 14000 | 14000 | 14000 | 14000 |
| Gas CO output in runner (Nm$^3$/min) | 1488.29 | 1488.29 | 1488.29 | 1488.29 | 1488.29 | 1488.29 |
| Amount of CO gas re-blown according to Equation 1 (Nm$^3$/min) | 1756.11 | 1646.90 | 1222.39 | 918.35 | 626.52 | 439.29 |
| Total input gas (Nm$^3$/ton) | 566.17 | 575.86 | 614.62 | 643.68 | 672.25 | 692.13 |
| Circulation rate (%) | 43.25 | 40.85 | 31.23 | 24.03 | 16.82 | 12.01 |

As can be seen from the above results, when the amount of CO gas re-blown exceeds 1270 Nm$^3$/min, the amount of carbon dioxide re-blown is increased as much, and accordingly, the total input gas blown into the blast furnace is reduced, which may be confirmed from the table. In the end, there will be a disadvantage in that the oxygen load needs to increase in order to preserve the heat energy as much as the reduced total input gas. In addition, when the amount of CO gas re-blown is less than 500 Nm$^3$/min, the carbon saving or $CO_2$ saving effect is lowered as much, and the ultimate object of the present invention to achieve energy saving and environmental protection effects is not accomplished.

**Exemplary embodiment 3** - **Comparison of specific surface area of carbon-containing by-product**

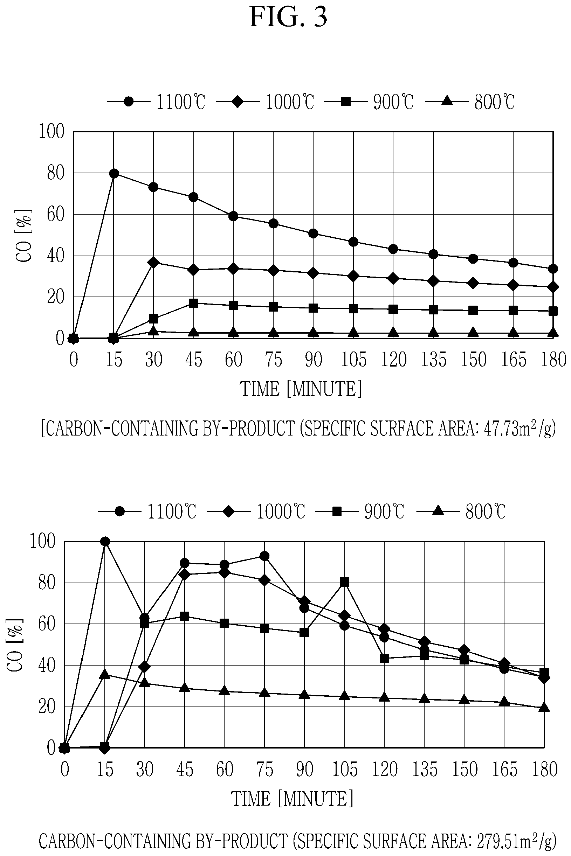

In order to realize the production of carbon monoxide in the apparatus for reforming carbon dioxide using the radiant heat in the runner, by blowing the carbon dioxide into the reaction tube filled with the carbon-containing byproducts with different specific surface areas as shown in Table 3, respectively, the conversion rate according to temperature was measured. It can be seen that the carbon monoxide conversion rate is increased as the reaction temperature is increased by the radiant heat in the runner, and at the same reaction temperature, it was observed that a conversion rate of a carbon-containing by-product having an excellent specific surface area was 20% better (see FIG. 3). However, it can be seen that, since there is a disadvantage in that re-blowing the carbon monoxide having the conversion rate of 85% reduces the total input gas blown into the blast furnace, and thus, the oxygen load should be increased to preserve the heat energy as much as the reduced total input gas, it is not preferable that the specific surface area is too large.

(Table 3)

| | Specific surface area (mm$^2$/g) | Conversion rate (%) |
|---|---|---|
| Comparative Example 1 | 47.73 | 33 |
| Exemplary embodiment 1 | 50 | 37 |
| Exemplary embodiment 2 | 279.51 | 70 |
| Exemplary embodiment 3 | 299.77 | 85 |
| Comparative Example 2 | 334.29 | 88.3 |
| * Conversion rate measurement: Volume of CO produced compared with a volume of $CO_2$ blown into a reactor | | |

**Exemplary embodiment 4** - **Comparison of mixing ratio of iron-containing by-product**

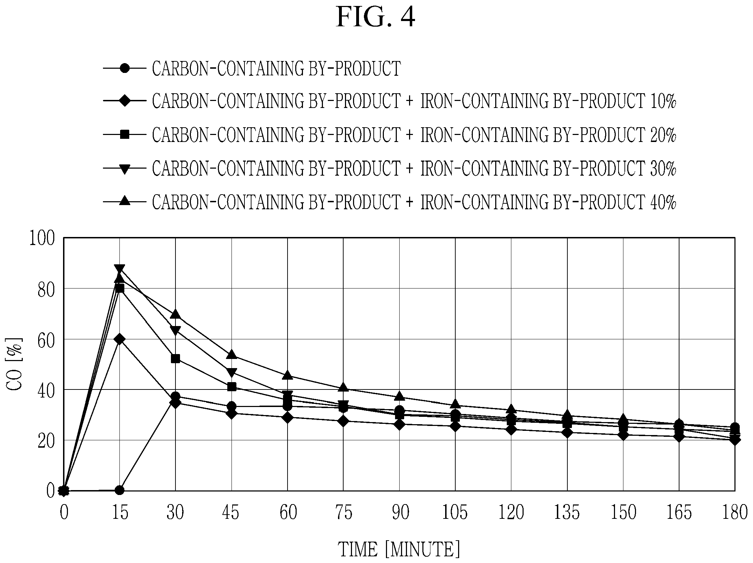

Since there are by-products with a low specific surface area in the carbon-containing by-product, the iron-containing by-product was mixed with the carbon-containing by-product and filled in the reaction tube to increase the utilization of these by-products and further improve the carbon monoxide conversion rate. Thereafter, the carbon monoxide conversion rate was measured using the radiant heat in the runner. The mixing ratio of the iron-containing by-product is 10 wt%, 20 wt%, 30 wt%, 40 wt%, and 60 wt% based on 100 wt% of the carbon-containing by-product, and Table 4 and FIG 4 showed the results of comparing the carbon monoxide conversion rate with the case of not mixing the iron-containing by-product. As a result, it could be confirmed that the conversion rate was superior to the case in which the iron-containing by-product is added compared with the case in which the iron-containing by-product is not added. In addition, it could be confirmed that the conversion rate is decreased when the ratio of the iron-containing by-product is rather increased too much.

(Table 4)

|  | Content of iron-containing by-product (%) | Conversion rate (%) |
|---|---|---|
| Comparative Example 1 | 0 | 33.2 |
| exemplary embodiment 1 | 10 | 34.9 |
| exemplary embodiment 2 | 20 | 52.2 |
| exemplary embodiment 3 | 30 | 63.5 |
| exemplary embodiment 4 | 40 | 83.8 |
| Comparative Example 2 | 60 | 69.8 |

The present invention is not limited to the exemplary embodiments, but may be manufactured in a variety of different forms, and those of ordinary skill in the art to which the present invention pertains will understand that the present invention may be implemented in other specific forms without changing the technical spirit or essential features of the present invention. Therefore, it should be understood that the above-described exemplary embodiments are exemplary in all aspects but are not limited thereto.

**Claims**

1. A method of producing molten iron, comprising:

   capturing carbon dioxide in an exhaust gas emitted from a blast furnace;
   reforming the carbon dioxide into carbon monoxide; and
   re-blowing the carbon monoxide into the blast furnace, wherein, in the re-blowing of the carbon monoxide into the blast furnace,
   an amount of CO gas re-blown ($Nm^3$/min) of [Equation 1] below satisfies 500 or more and 1270 or less.

$$\text{[Equation 1] Amount of CO gas re-blown } (Nm^3/min) = \text{Content of } CO_2$$

$$\text{gas in exhaust gas } (Nm^3/ton) \times \text{Molten iron output (ton/day)} \times \text{Ratio of } CO_2 \text{ gas}$$

$$\text{blown into runner (50\%)} \times \text{CO gas conversion rate (\%)} \times (1 \text{ day/1440 min})$$

2. The method of claim 1, wherein:
   a CO gas circulation rate of [Equation 2] below is 15 to 40%.

$$\text{[Equation 2] CO gas circulation rate (\%)} = \text{Amount of CO gas re-blown}$$

$$(Nm^3/min)/[\text{Content of CO gas in exhaust gas } (Nm^3/ton) \times \text{Molten iron output}$$

$$(ton/day)] \times (1440 \text{ min/1 day}) \times 100[\%]$$

3. The method of claim 1, wherein:
   the CO gas conversion rate of the above [Equation 1] is 35% or more to less than 85%.

**4.** The method of claim 1, wherein:

in the re-blowing of the carbon monoxide into the blast furnace,
a temperature of the carbon monoxide is 800°C or higher.

**5.** The method of claim 1, wherein:
in the re-blowing of the carbon monoxide into the blast furnace, an amount of pulverized coal blown according to the CO conversion rate of [Equation 3] below satisfies 100 to 170 kg/ton-pig.

[Equation 3] Amount (kg/ton-pig) of pulverized coal blown according to CO conversion rate = -0.007*[CO conversion rate (%)]$^2$-0.00005*[CO conversion rate (%)] + 170.3

**6.** An apparatus for reforming carbon dioxide, wherein

an inside of the apparatus is filled with a mixture of a carbon-containing by-product and an iron-containing by-product,
a mixing ratio of the carbon-containing by-product and the iron-containing by-product includes 10 to 50 wt% of the iron-containing by-product based on 100 wt% of the carbon-containing by-product, and
the carbon dioxide is reformed into carbon monoxide.

**7.** The apparatus of claim 6, wherein:
a specific surface area of the carbon-containing by-product is 50 $m^2$/g or more.

**8.** The apparatus of claim 6, wherein:

a carbon component of the carbon-containing by-product is 80 wt% or more, and
an iron-containing component of the iron-containing by-product is 50 wt% or more.

**9.** An apparatus for reforming carbon dioxide in exhaust gas emitted from a blast furnace, wherein
the apparatus for reforming carbon dioxide is installed in a melt runner during an iron making process.

**10.** The apparatus of claim 9, wherein:
at least one apparatus for reforming carbon dioxide is installed over the entire area of the melt runner.

**11.** The apparatus of claim 9, wherein:

when the apparatus for reforming carbon dioxide is two or more,
reaction tubes are installed, fixed, and connected in a form of a bundle or a mesh.

**12.** The apparatus of claim 9, wherein:

the melt runner has a cover on the melt, and
the apparatus for reforming carbon dioxide is present between the melt and the cover.

**13.** The apparatus of claim 12, wherein:
the temperature between the melt in the melt runner and the cover is 900°C or higher.

**14.** The apparatus of claim 9, wherein:
a position of the apparatus for reforming carbon dioxide is adjusted in consideration of an amount of melt in the melt runner.

# FIG. 1

BF top gas

CO₂ SEPARATION IN EXHAUST GAS — CO, H₂, N₂

POWER GENERATION

INERT GAS N₂

POWER GENERATION

50% CO₂

50% CO₂

USE RADIANT HEAT FROM MELT CONVERT CO₂ → CO

CO/CO₂

Hot Blast

FIG. 2

SIDE VIEW OF MELT RUNNER

Fe + C-CONTAINING IRON BY-PRODUCT CONTAINING :
EX) BLAST FURNACE DUST, SINTER
ELECTROSTATIC PRECIPITATION DUST

BLOW ENRICH CO INTO
TUYERE OF BLAST FURNACE

$CO_2$

$CO_2 + C \rightarrow 2CO$

CO

HEAT SOURCE SUPPLY

MELT (1300~1500)℃

LIQUID STATE
Gas        Birdnest

미연 Char발생

CO LOAD

연소대

Coke 분퇴적

Raceway

TUBE HAVING EXCELLENT
THERMAL CONDUCTIVITY

Splash Cover

MOLTEN IRON RUNNER

OUTLET

BLAST FURNACE

EP 4 063 524 A1

# FIG. 3

[CARBON-CONTAINING BY-PRODUCT (SPECIFIC SURFACE AREA: 47.73m$^2$/g)

CARBON-CONTAINING BY-PRODUCT (SPECIFIC SURFACE AREA: 279.51m$^2$/g)

## FIG. 4

Legend:
- ● CARBON-CONTAINING BY-PRODUCT
- ◆ CARBON-CONTAINING BY-PRODUCT + IRON-CONTAINING BY-PRODUCT 10%
- ■ CARBON-CONTAINING BY-PRODUCT + IRON-CONTAINING BY-PRODUCT 20%
- ▼ CARBON-CONTAINING BY-PRODUCT + IRON-CONTAINING BY-PRODUCT 30%
- ▲ CARBON-CONTAINING BY-PRODUCT + IRON-CONTAINING BY-PRODUCT 40%

Y-axis: CO [%]
X-axis: TIME [MINUTE]

EP 4 063 524 A1

# FIG. 5

COVER

REACTION TUBE

AIR BETWEEN
MELT AND COVER

MOLTEN IRON

REFRACTORY IN RUNNER

## INTERNATIONAL SEARCH REPORT

| International application No. |
| --- |
| **PCT/KR2020/016101** |

**A. CLASSIFICATION OF SUBJECT MATTER**

**C21B 5/06**(2006.01)i; **C21B 7/00**(2006.01)i

According to International Patent Classification (IPC) or to both national classification and IPC

**B. FIELDS SEARCHED**

Minimum documentation searched (classification system followed by classification symbols)

C21B 5/06(2006.01); B01D 53/62(2006.01); B01J 23/745(2006.01); B01J 23/78(2006.01); C01B 3/34(2006.01); C01B 3/40(2006.01); C01B 32/40(2017.01); F01K 25/08(2006.01); F01K 27/02(2006.01); F27D 17/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 이산화탄소(carbon dioxide), 일산화탄소(carbon monoxide), 포집(collecting), 고로(blast furnace) 및 용철(ingot iron)

**C. DOCUMENTS CONSIDERED TO BE RELEVANT**

| Category* | Citation of document, with indication, where appropriate, of the relevant passages | Relevant to claim No. |
| --- | --- | --- |
| Y | KR 10-2012-0060001 A (POSCO) 11 June 2012 (2012-06-11)<br>See paragraphs [0034]-[0060], claim 1 and figures 1-4. | 6-14 |
| A | | 1-5 |
| Y | JP 2016-155702 A (JFE STEEL CORP.) 01 September 2016 (2016-09-01)<br>See paragraphs [0013]-[0024]. | 6-8 |
| Y | KR 10-2013-0134365 A (HYUNDAI STEEL COMPANY) 10 December 2013 (2013-12-10)<br>See paragraphs [0028]-[0040], claim 1 and figures 1-2. | 9-14 |
| A | JP 2017-024957 A (JFE STEEL CORP.) 02 February 2017 (2017-02-02)<br>See paragraphs [0009]-[0013] and figures 1-3. | 1-14 |
| A | US 2014-0130639 A1 (BALDAUF et al.) 15 May 2014 (2014-05-15)<br>See paragraphs [0006]-[0036]. | 1-14 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **19 February 2021** | **22 February 2021** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2020/016101**

| Patent document cited in search report | | | Publication date (day/month/year) | Patent family member(s) | | | Publication date (day/month/year) |
|---|---|---|---|---|---|---|---|
| KR | 10-2012-0060001 | A | 11 June 2012 | KR | 10-1235268 | B1 | 20 February 2013 |
| JP | 2016-155702 | A | 01 September 2016 | JP | 6222132 | B2 | 01 November 2017 |
| KR | 10-2013-0134365 | A | 10 December 2013 | KR | 10-1377505 | B1 | 25 March 2014 |
| JP | 2017-024957 | A | 02 February 2017 | JP | 6350430 | B2 | 04 July 2018 |
| US | 2014-0130639 | A1 | 15 May 2014 | CN | 103608469 | A | 26 February 2014 |
| | | | | CN | 103608469 | B | 17 August 2016 |
| | | | | DE | 102011077819 | A1 | 20 December 2012 |
| | | | | EP | 2705167 | A2 | 12 March 2014 |
| | | | | US | 9322597 | B2 | 26 April 2016 |
| | | | | WO | 2012-175368 | A2 | 27 December 2012 |
| | | | | WO | 2012-175368 | A3 | 07 March 2013 |

Form PCT/ISA/210 (patent family annex) (July 2019)